# FASCICULE DE BREVET EUROPEEN

(11) **EP 0 715 375 B1**
(45) Date de publication et mention de la délivrance du brevet: **26.05.1999**
(21) Numéro de dépôt: 95402628.2
(22) Date de dépôt: 22.11.1995
(51) Int. Cl.: H01R 25/00, H02G 3/14

(54) **Appareillage électrique à éléments modulaires**
Modulare elektrische Vorrichtung
Modular electrical assembly

(30) Priorité: 02.12.1994 FR 9414556
(43) Date de publication de la demande: 05.06.1996
(73) Titulaire: P.G.E.P. PROFESSIONAL GENERAL ELECTRONIC PRODUCTS Société Anonyme, 92400 Courbevoie (FR)
(72) Inventeur: Blanchot, Michèle, F-78270 Cravent (FR); Potier, Daniel, F-27950 Saint-Just (FR); Palisson, Yves, F-45130 Huiseau sur Mauves (FR)
(74) Mandataire: Loyer, Bertrand

(56) Documents cités:
- EP-A- 0 009 151
- EP-A- 0 109 876
- EP-A- 0 498 405
- US-A- 4 952 164

## Description

La présente invention concerne un appareillage électrique constitué d'éléments modulaires de fonctions variées munis de moyens coopérants d'interconnexion mécanique et électrique.

Lesdits moyens coopérants d'interconnexion permettent d'assembler directement lesdits éléments modulaires les uns aux autres sans nécessiter d'outil ou d'élement complémentaire de manière à constituer une réglette.

Un tel appareillage propose une gamme d'éléments modulaires permettant de réaliser toutes les installations électriques habituelles, ces éléments peuvent par exemple comporter des prises de courant, des disjoncteurs, des interrupteurs, des voyants lumineux, des fusibles ou des filtres.

Les éléments modulaires comportent un ou plusieurs éléments fonctionnels identiques ou non.

EP-A-0 498 405 décrit un système modulaire de réglette de distribution de courant électrique, dans lequel un élément comportant les contacts présente des faces- avant formant socles de prises de courant et des extrémités respectivement mâles et femelles, assemblables bout à bout, de sorte à pouvoir former une réglette de longueur arbitraire.

L'invention propose un appareillage électrique analogue à une réglette constitué par assemblage d'éléments modulaires de fonctions variées, lesdits éléments modulaires étant munis de moyens coopérants d'interconnexion mécanique et électrique permettant de les assembler directement les uns aux autres, caractérisé en ce que lesdits éléments modulaires sont constitués d'une face avant ayant au moins une fonction déterminée, d'un support de contacts dans lequel sont montés les moyens nécessaires à la distribution de l'électricité, d'un embout mâle et d'un embout femelle comportant les moyens de connexion mécanique et électrique.

L'appareillage selon l'invention est encore remarquable en ce que :
- le support de contacts présente trois gouttières pour la mise en place de barres de courant,
- la gouttière centrale reçoit la barre de terre tandis que les gouttières latérales reçoivent les barres de phase et de neutre,
- les gouttières sont de place en place partiellement obturées par des parois disposées par paires perpendiculairement aux parois des gouttières et laissant entre elles un passage étroit dans lequel est insérée la barre conductrice,
- l'embout mâle comporte une face plane destinée à être fixée à l'extrémité du support de contact afin d'en former une paroi d'extrémité et des moyens d'encliquetage pour sa solidarisation à un embout femelle,
- les moyens d'encliquetage sont constitués par deux pattes d'encliquetage munies de languettes élastiques,
- un bossage divisé en trois cavités est disposé au centre de la face plane dudit embout mâle, les trois cavités étant disposées dans le prolongement des gouttières,
- l'embout femelle comporte une face plane destinée à former une paroi d'extrémité du support de contact et des logements pour l'insertion des moyens d'encliquetage d'un embout mâle,
- l'embout femelle est traversé par une ouverture de dimensions sensiblement égales aux dimensions externes du bossage de l'embout mâle, disposée en face des gouttières,
- des pinces fixées aux extrémités des barres de contact sont à l'intérieur des cavités de l'embout mâle et les extrémités plates des barres de contact s'étendent à travers l'ouverture de l'embout femelle,
- un bouchon de sécurité de forme semblable à un embout mâle est fixé dans l'embout femelle afin d'éviter que l'usager puisse toucher les extrémités plates des barres qui sont disposées dans l'ouverture,
- chaque embout femelle est équipé d'une cloison mobile ou obturateur d'embout,
- l'appareillage comporte un bornier pour l'alimentation en courant électrique des éléments modulaires comportant une face avant fermée et un support de contacts portant trois moyens de fixation des câbles par lesquels est fourni le courant électrique solidarisés à des lames conductrices visibles dans l'extrémité femelle du bornier à laquelle seront raccordés les éléments modulaires,
- l'extrémité femelle du bornier présente une ouverture traversée par les lames conductrices et des logements semblables à l'ouverture et aux logements des embouts femelles des éléments modulaires de manière à pouvoir connecter à cette extrémité femelle l'embout mâle d'un élément modulaire,
- le bornier est muni d'une cloison mobile ou obturateur de bornier qui est positionnée dans le plan de l'extrémité femelle lorsqu'aucun élément n'est raccordé au bornier, et masque les lames conductrices,
- les cloisons mobiles utilisées pour obturer l'embout femelle et/ou le bornier sont maintenues dans leur position de repos,
- des moyens de désencliquetage sont prévus pour le déverrouillage des moyens d'encliquetage.

L'invention sera mieux comprise grâce à la description qui va suivre donnée à titre d'exemple non limitatif en référence aux dessins annexés dans lesquels :
- la figure 1 est une vue en perspective d'un élément modulaire proposant deux prises de courant et du bouchon de sécurité qui peut lui être rapporté,
- la figure 2 montre la face avant d'un élément proposant deux prises de courant suivant la norme française,
- la figure 3 montre la face avant d'un élément proposant deux prises de courant suivant la norme allemande,
- la figure 4 montre le support de contacts, muni des éléments conducteurs et des embouts mâle et femelle, d'un élément modulaire proposant trois prises de courant suivant la norme française,
- la figure 5 correspond à la figure 4 pour un élément modulaire proposant trois prises de courant suivant la norme allemande,
- la figure 6 est une vue de dessous de la face avant de la figure 2,
- la figure 7 est une coupe partielle suivant la ligne VII-VII de la figure 6,
- la figure 8 est une vue de dessus en perspective d'un obturateur d'alvéole,
- la figure 9 est une vue de dessous en perspective de l'obturateur d'alvéole de la figure 8,
- la figure 10 est une vue de dessus d'un support de contacts pour élément à deux prises de courant de norme française,
- la figure 11 est une vue en coupe suivant la ligne XI-XI de la figure 10,
- la figure 12 est une vue en coupe suivant la ligne XII-XII de la figure 10,
- la figure 13 est une vue en perspective d'un support de contacts pour élément à deux prises de courant de norme française, l'extrémité située à gauche sur le dessin étant destinée à recevoir un embout mâle,
- la figure 14 est une vue en perspective d'un support de contacts pour élément à deux prises de courant de norme allemande, l'extrémité située à gauche sur le dessin étant destinée à recevoir un embout femelle,
- la figure 15 montre un élément conducteur de terre pour prise de norme française,
- la figure 15' montre un isolant de conducteur de terre,
- la figure 16 montre un conducteur de phase,

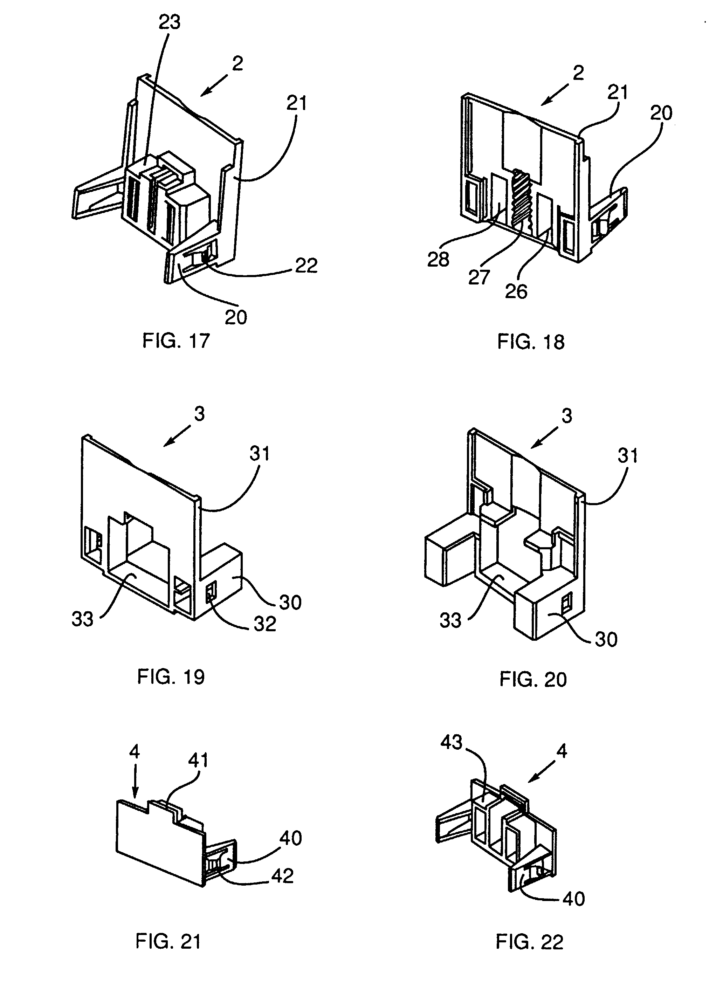

- la figure 17 montre l'embout mâle vu de l'extérieur de l'élément,
- la figure 18 montre l'embout mâle vu de l'intérieur de l'élément,
- la figure 19 montre l'embout femelle vu de l'extérieur de l'élément,
- la figure 20 montre l'embout femelle vu de l'intérieur de l'élément,
- la figure 21 montre le bouchon de sécurité vu de l'extérieur de l'élément,
- la figure 22 montre le bouchon de sécurité vu de l'intérieur de l'élément,

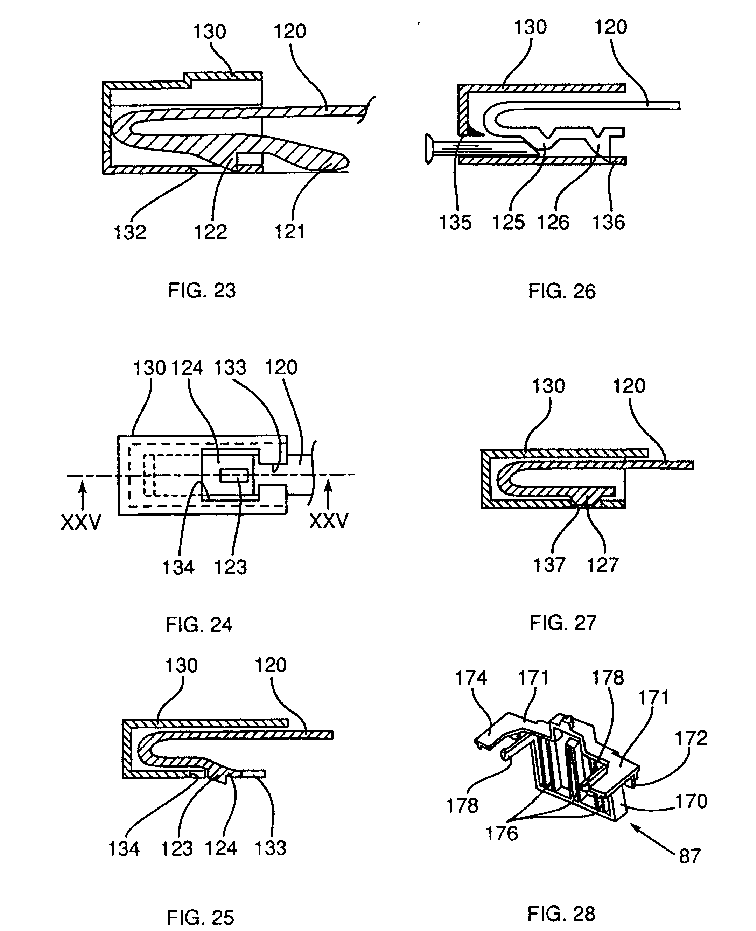

- la figure 23 est une vue en coupe d'une première variante de réalisation des moyens mécaniques de connexion,
- la figure 24 est une vue de côté d'une seconde variante de réalisation des moyens mécaniques de connexion,
- la figure 25 est une vue en coupe suivant la ligne XXV-XXV de la figure 24,
- la figure 26 est une vue en coupe d'une troisième variante de réalisation des moyens mécaniques de connexion,
- la figure 27 est une vue en coupe d'une quatrième variante de réalisation des moyens mécaniques de connexion,
- la figure 28 est une vue en perspective d'un obturateur de bornier,

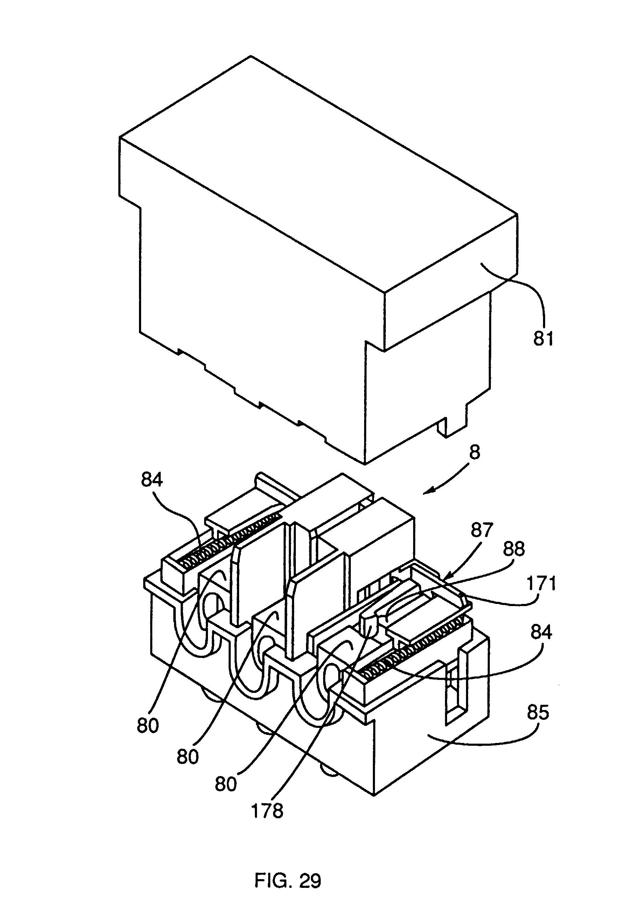

- la figure 29 est une vue de l'arrière en perspective du bornier avec l'obturateur de bornier en position d'obturation,

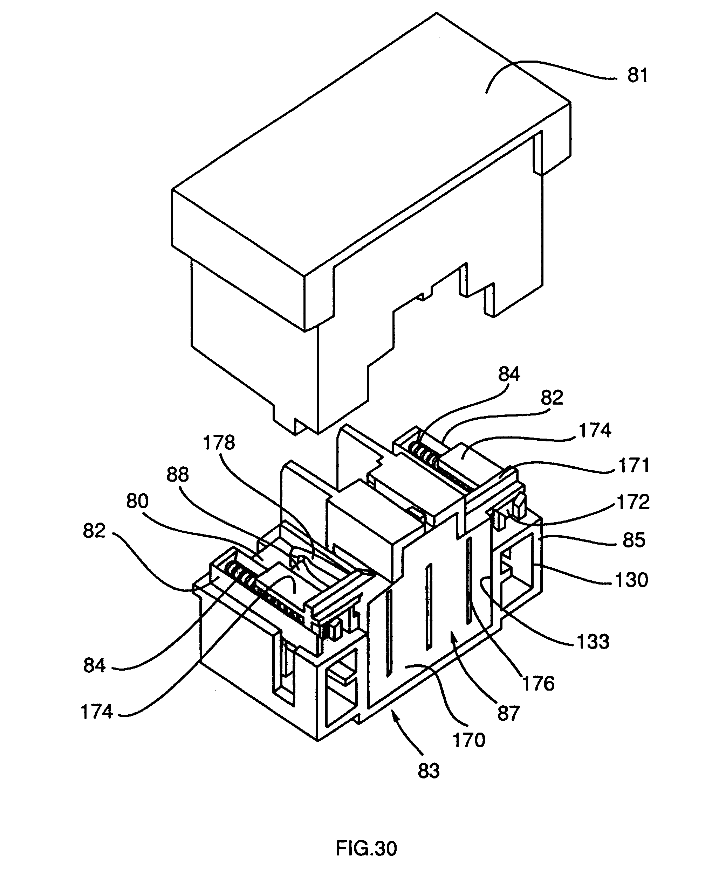

- la figure 30 est une vue de l'avant en perspective du bornier avec l'obturateur de bornier en position d'obturation,

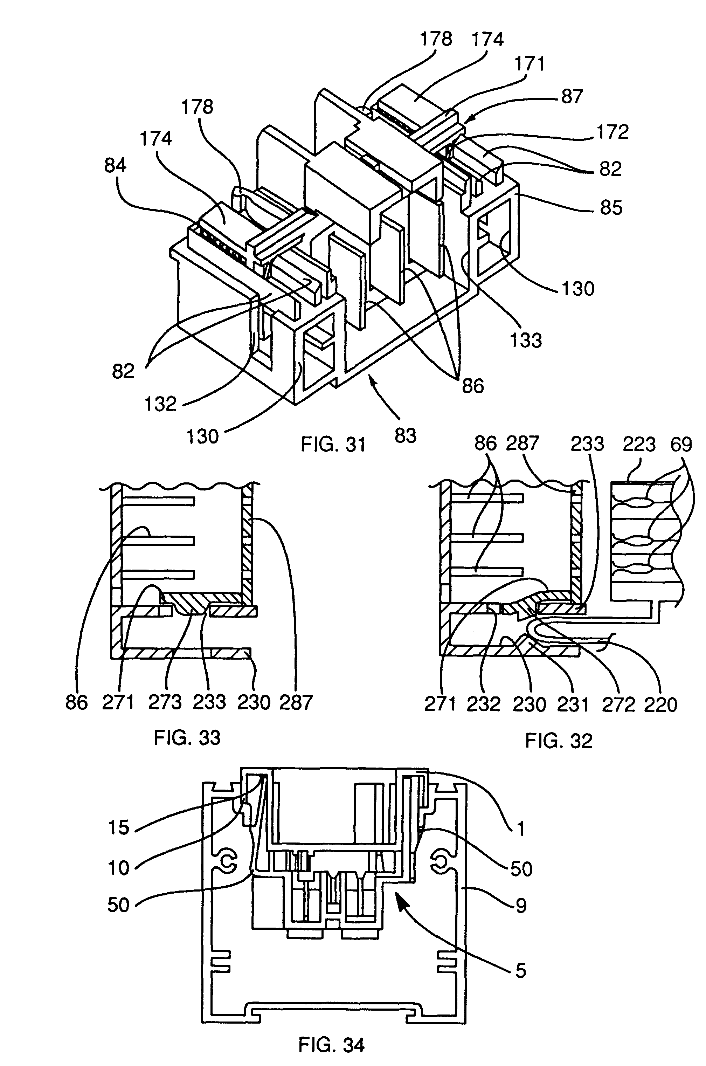

- la figure 31 est une vue de l'avant en perspective du support de contacts du bornier avec l'obturateur de bornier en position rentrée,
- les figures 32 et 33 montrent deux variantes de réalisation de l'obturateur de bornier,
- la figure 34 est une vue en coupe montrant la mise en place d'un élément dans un rail.

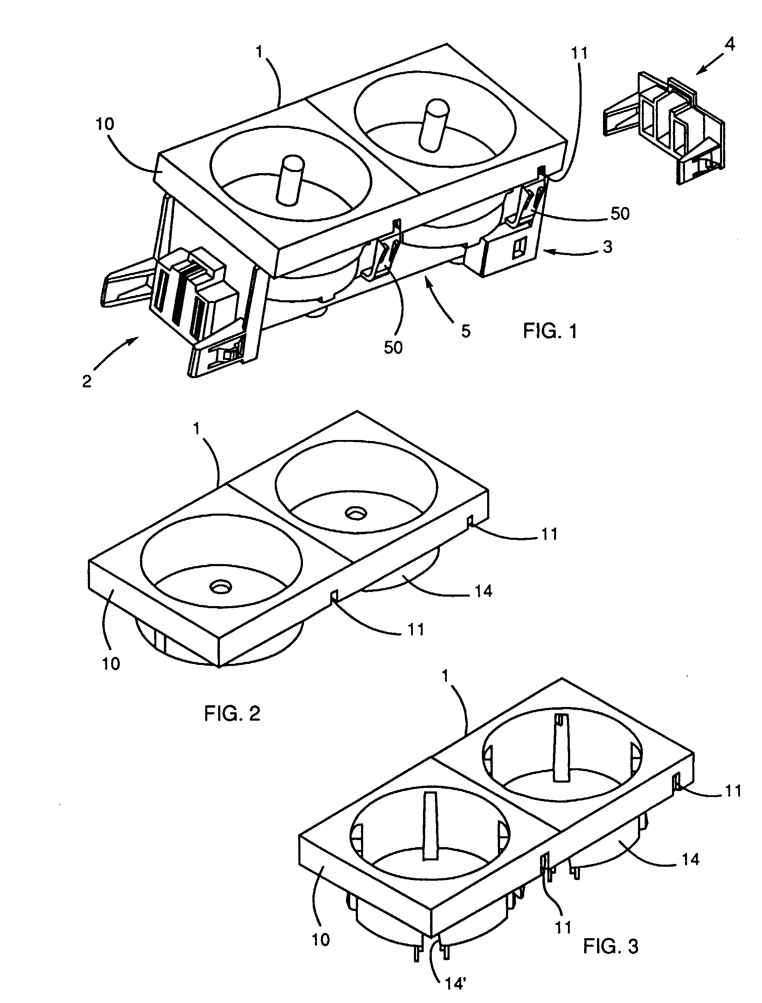

Sur la figure 1, est figuré un élément modulaire suivant l'invention qui est globalement parallélépipèdique. Il présente une face avant 1 conformée de manière à fournir un ou des éléments fonctionnels, deux prises de courant suivant la norme française dans l'exemple de la figure 1 et un support de contacts 5 dans lequel sont montés les moyens nécessaires à la distribution de l'électricité.

Cet élément modulaire présente encore des moyens mâles de connexion sur l'un de ses petits côtés et des moyens femelles de connexion, non visibles à la figure 1, sur l'autre de ses petits côtés.

Ces éléments de connexion assurent les liaisons électriques et mécaniques entre les éléments modulaires et sont portés par un embout mâle 2 et par un embout femelle 3 qui seront décrits plus en détail par la suite.

Un bouchon de sécurité 4 est prévu pour assurer la fermeture de l'embout femelle 3 et interdire l'accès aux moyens de connexion électrique qu'il comporte.

Des pattes élastiques 50 fixées sur le support de contacts 2 sont disposées le long de la périphérie de l'élément modulaire. Ces pattes sont destinées à assurer le maintien de l'élément modulaire dans un rail ou dans tout autre dispositif analogue, elles permettent également le maintien en place de plaques d'ornement autour de la face avant.

La face supérieure de la face avant est rectangulaire et entourée par un bord tombant 10. Des encoches 11 sont pratiquées dans ce bord tombant 10 de manière à permettre le passage d'un outil de faible dimension en vue de repousser les pattes élastiques 50 vers le module lorsque il faut désolidariser celui-ci des moyens de maintien ou d'ornement auxquels il a été encliqueté.

Les figures 2 et 3 représentent deux exemples de réalisation d'une face avant d'élément modulaire. Ces figures montrent des faces avant pour deux éléments fonctionnels, des socles de prises de courant, correspondant respectivement à la norme française et à la norme allemande. Ces faces avant 1 présentent des logements cylindriques 14 pour l'insertion des fiches de courant. Les logements 14 des socles suivant la norme allemande ont des échancrures 14' pour le passage des languettes de mise à la terre.

Des faces avant de formes différentes sont prévues afin d'équiper les éléments modulaires selon les fonctions électriques qu'ils fournissent. Il existe par exemple des faces avant pour socles de prises de courant comme représenté aux dessins, pour interrupteurs, pour disjoncteurs, des faces avant totalement planes et fermées pour couvrir des éléments auxquels l'usager ne peut avoir accès, ...

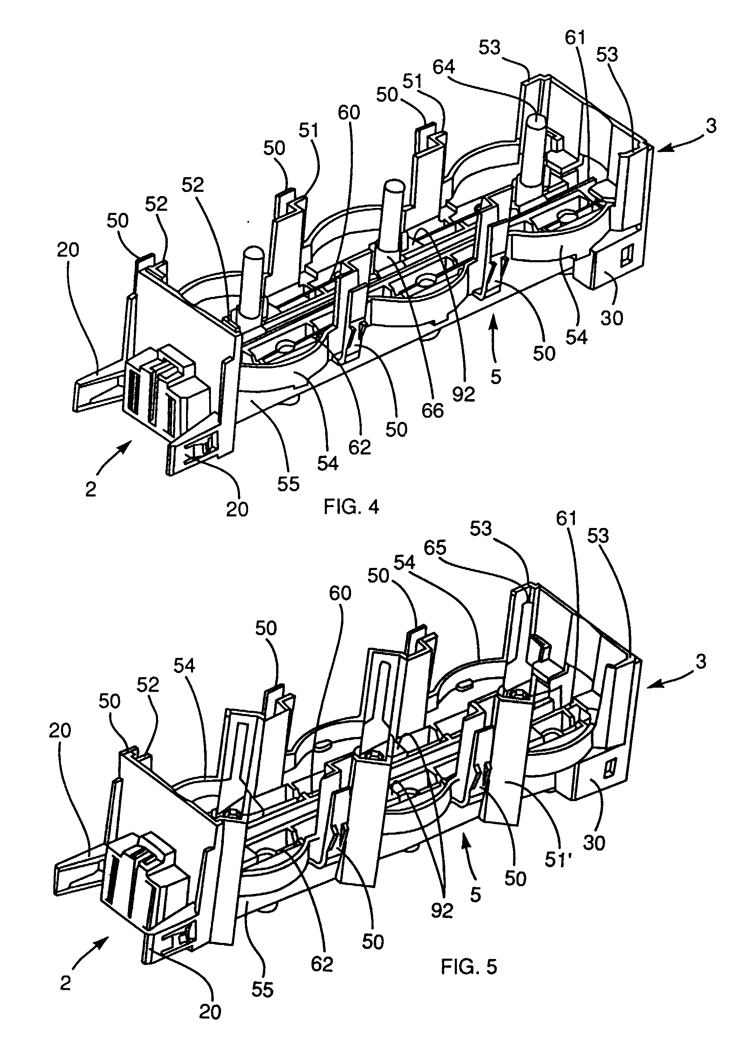

Les figures 4 et 5 représentent des éléments modulaires proposant trois socles de prises de courant, correspondant respectivement à la norme française et à la norme allemande, sans la face avant.

Dans un but de simplification, les mêmes références sont conservées pour un élément qu'il soit à deux ou trois socles, qu'il corresponde à la norme française ou à la norme allemande. La référence 1 est ainsi utilisée pour toutes les faces avant et la référence 5 pour tous les supports de contacts. Seuls des éléments de conception différente porteront des références différentes.

Les supports de contact 5 sont globalement formés d'une embase 55 et de montants 51.

Un support de contacts destiné aux prises de courant selon la norme allemande est représenté à la figure 5, il est réalisé en ajoutant au support de contacts pour prises de courant selon la norme Française, des montants 51' destinés à la mise en place des languettes de prise de terre.

L'embase 55 est conformée de manière à supporter les conducteurs électriques constitués de la barre de phase 60, de la barre de terre 61 et de la barre de neutre 62. Dans l'exemple de la figure 4, la barre de terre 61 porte des fiches de terre 64 tandis que dans l'exemple de la figure 5, la barre de terre 61 porte des étriers 65.

Dans les exemples de réalisation montrés aux dessins dans lesquels les éléments modulaires proposent des prises de courant, l'embase 55 présente des portions cylindriques 54 entre lesquelles sont positionnés les montants 51.

Les montants 52 disposés à l'une des extrémités du support de contacts 5 sont conformés de manière à permettre la fixation de l'embout mâle 2, tandis que les montants 53 disposés à l'extrémité opposée sont conformés de manière à permettre la fixation de l'embout femelle 3. Ils présentent à cet effet des portions planes dans le plan d'extrémité du support de contacts.

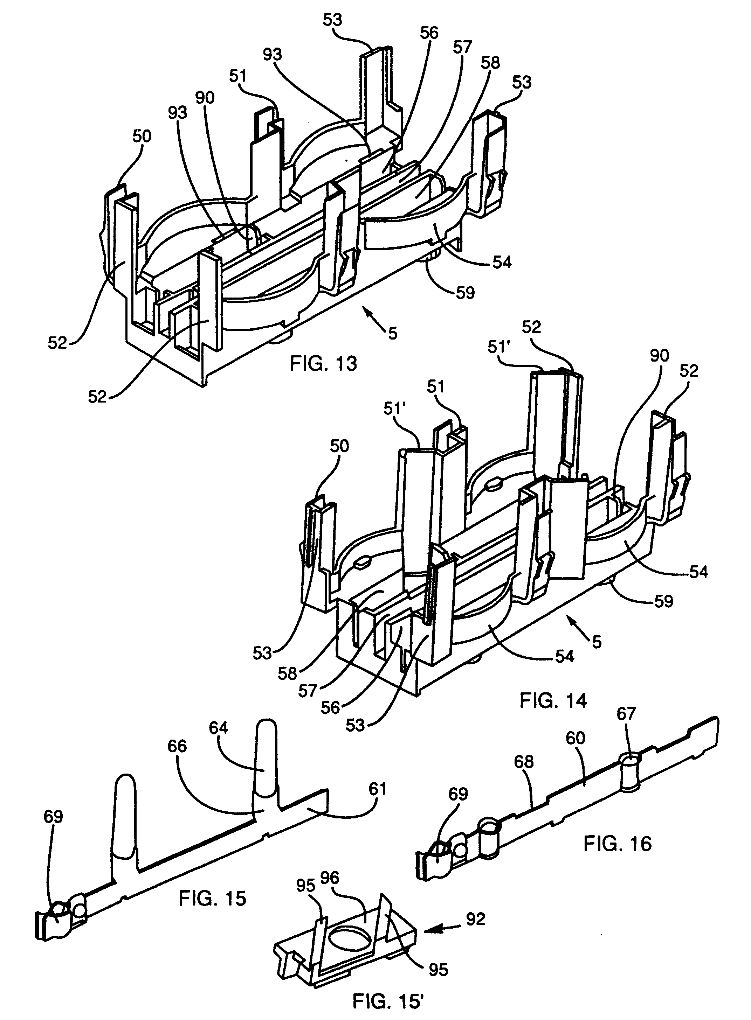

Ces montants sont mieux visibles aux figures 13 et 14 sur lesquelles seul le support de contacts 5 est représenté.

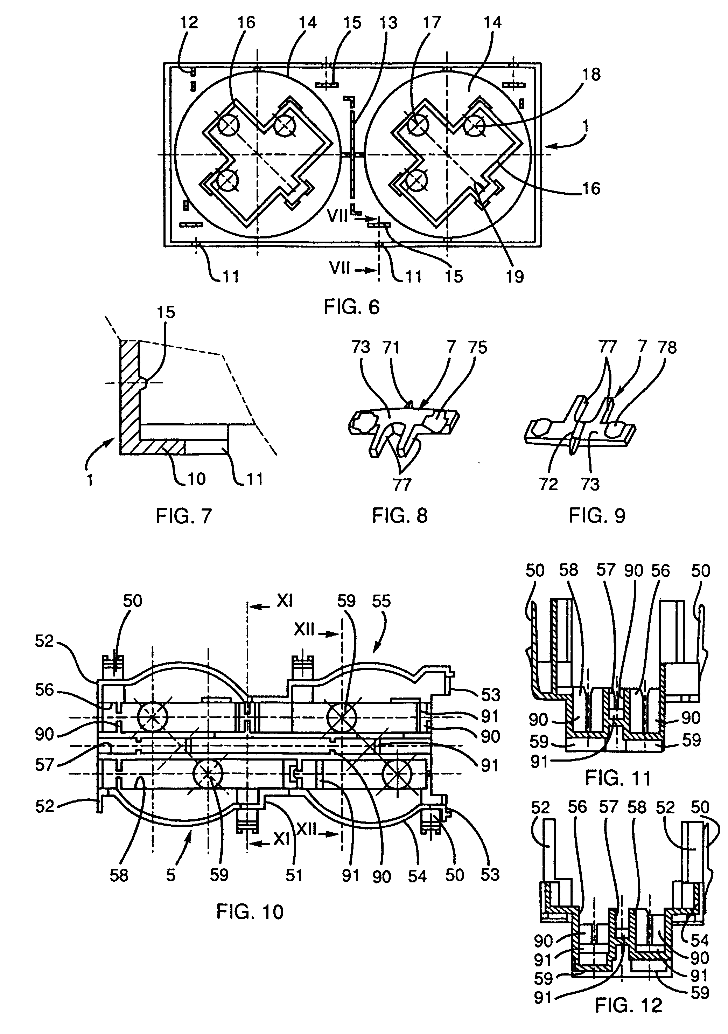

La figure 6 représentant une face avant 1 vue de dessous, montre que la face inférieure des logements cylindriques 14 porte un boîtier d'obturateur d'alvéole 16.

L'obturateur d'alvéole 7 représenté aux figures 8 et 9 est un obturateur de type connu et sera succinctement décrit ci-après.

Cet obturateur 7 est globalement en forme de T.

Au repos, lorsqu'il n'y a pas de fiche de courant enfoncée dans le socle, la barre transversale 73 est disposée devant les ouvertures 18 prévue pour le passage des fiches de phase et de neutre, les bossages inclinés 75 sont tournés vers la face supérieure de la face avant 1 tandis que les bossages 78 sont tournés vers le boîtier 16. Les bras 77 sont disposés de part et d'autre de la fiche de terre traversant l'ouverture 17. L'obturateur porte sur sa face inférieure une nervure 72 sur laquelle il bascule lorsqu'il n'est pas soumis à une action symétrique de la part des broches de phase et de neutre de la fiche de prise de courant.

Cet obturateur 7 est repoussé en position d'obturation par un ressort non représenté positionné autour de l'ergot 71 et en appui dans le logement 19 du boîtier 16.

La face inférieure de la face avant 1 présente également des nervures 12, 13 destinées à venir en appui contre les extrémités supérieures des montants du support de contacts 5 ou contre l'embase 55 de celui-ci lors du montage de ladite face avant sur ledit support de contacts.

Ces nervures ne sont pas représentées plus en détail au dessin, elles sont généralement plates et de forme trapézoïdale.

Des bossages 15 de faible hauteur sont encore prévus sous la face avant 1. Ces bossages 15 sont disposés en regard des encoches 11 et sont destinés au maintien des languettes élastiques 50 en retrait.

Une telle position est visible à la figure 34 sur laquelle l'élément modulaire est représenté disposé dans un rail 9. La languette 50 de droite est dans sa position ouverte pour laquelle elle assure le maintien de l'élément modulaire dans le rail 9 tandis que la languette de gauche a été repoussée derrière le brossage 15 par l'introduction d'un outil dans une encoche 11 non représentée.

Comme visible aux figures 10 à 12, l'embase 55 du support de contacts 5 présente trois gouttières 56, 57 et 58 pour la mise en place des barres conductrices 60 à 62.

La gouttière centrale 57 reçoit la barre de terre tandis que les gouttières latérales reçoivent les barres de phase et de neutre.

Ces gouttières sont de place en place partiellement obturées par des parois 90 disposées par paires perpendiculairement aux parois des gouttières et laissant entre elles un passage étroit dans lequel est insérée la barre de courant de telle sorte que lesdites parois 90 constituent des supports pour le maintien en position desdites barres.

Les barres conductrices reposent sur des barrettes 91 de faible hauteur traversant les gouttières.

Les gouttières 56 et 58 destinées à la barre de phase et à la barre de neutre sont plus larges que la gouttière destinée à la barre de terre de manière à permettre la disposition des logements 67 nécessaires à l'insertion des fiches de phase et de neutre de la prise de courant, elles ont une largeur égale au diamètre maximal que peuvent avoir les logements lorsqu'une fiche est insérée.

Ces gouttières de phase et de neutre présentent des logements 59 dans lesquels peuvent pénétrer les extrémités des broches de phase et de neutre lors du branchement dans le socle d'une fiche de prise de courant.

Des barres conductrices sont représentées aux figures 15 et 16.

Les barres conductrices sont par exemple réalisées à partir d'une feuille de matériau conducteur repliée en deux dans le sens de la longueur.

La figure 15 montre une barre de terre 61, portant les fiches de terre 64 suivant la norme française. Ces fiches de terre 64 sont montées sur des consoles 66 assurant le positionnement de la fiche de terre 64 au-dessus de la gouttière de phase 56 alors que la barre de neutre est disposée au milieu du support de contacts. Dans le cas des socles pour prises de courant suivant la norme allemande, l'étrier 65 est fixé sur la barre de terre 61 en étant disposé en biais de manière à amener les éléments de terre contre les montants 51' du support de contacts.

Les consoles 66 doivent passer au-dessus de la barre de phase et les étriers 65 doivent passer au-dessus de la barre de phase et de la barre de neutre.

Un isolant de conducteur de terre 92, tel que celui représenté à la figure 15', est disposé pour un socle à la norme française, entre les consoles 66 de la barre de terre et la barre de phase de manière à éviter les courts circuits entre ces barres. Pour un socle à la norme allemande, deux tels isolants de conducteur de terre 92 seront disposés entre chaque étrier 65 et la barre de phase d'une part, la barre de neutre d'autre part.

Il se présente sous la forme d'une plaquette de faible dimension portant sur sa face supérieure des nervures 95 laissant entre elles un logement 96 pour une console 66 ou l'étrier 65. Cette plaquette porte sur sa face inférieure des bossages permettant sa mise en place sur la gouttière de phase ou sur la gouttière de neutre le long desquelles sont prévues des encoches 93.

Une barre de phase 60 est représentée à la figure 16. Elle est réalisée d'une feuille de matériau conducteur repliée en deux dans le sens de sa longueur de façon à être constituée de deux lames positionnées l'une contre l'autre, chaque lame comportant des bossages formant les logements 67 régulièrement répartis. Elle présente également des encoches 68 le long de son bord supérieur pour permettre la mise en place de l'isolant de conducteur de terre 92.

La barre de neutre n'a pas été représentée au dessin. Comme la barre de phase, la barre de neutre présente des encoches 68 et des logements 67 répartis sur sa longueur. La disposition relative de ces encoches et logements est différente afin de tenir compte des places occupées par les alvéoles de neutre et l'étrier 65 de terre.

Une pince 69 est fixée à une extrémité des barres de courant. Cette pince forme un élément femelle de la connexion électrique qui sera réalisée entre des éléments modulaires.

Dans l'exemple de réalisation représenté au dessin, ces éléments électriques femelles sont disposés dans l'embout mâle 2 tandis que les éléments électriques mâles formés par les extrémités plates des barres de courant sont disposés dans l'embout femelle 3.

Les figures 17 et 18 représentent l'embout mâle respectivement vu depuis l'extérieur de l'élément modulaire et depuis l'intérieur dudit élément.

Cet embout mâle 2 comporte une face plane 21 destinée à être fixée sur les montants 52 disposés à l'extrémité du support de contact 5 afin d'en former une paroi d'extrémité (figures 4 et 5).

Il porte des moyens d'encliquetage pour sa solidarisation à l'embout femelle.

Ces moyens d'encliquetage sont constitués par deux pattes d'encliquetage 20 munies de languettes élastiques 22 situés dans l'exemple représenté sur le côté externe de cette face plane 21 et de part et d'autre de celle-ci.

Ce positionnement des moyens d'encliquetage permet de réduire l'encombrement de l'embout.

Au centre de cette face plane 21, et toujours sur la face externe de celle-ci, est disposé un bossage 23 divisé en trois cavités 26, 27 et 28 par des parois verticales de faible épaisseur. Ces trois cavités sont, lorsque l'embout mâle est fixé au support de contact, disposées dans le prolongement des gouttières 56 à 58. Les pinces 69 fixées aux extrémités des barres de contact 60 à 62 sont alors à l'intérieur des cavités 26 à 28. Les surfaces de la cavité centrale 27 sont, dans l'exemple représenté, munies de rainures afin de permettre un moulage de bonne qualité de la pièce compte tenu de l'importante épaisseur de matière présente sur ces parois.

L'embout femelle représenté aux figures 19 et 20 comporte lui aussi une face plane 31 destinée à former la paroi d'extrémité du support de contact 5 en étant fixée aux montants 53.

Cet embout femelle 3 présente des logements 30 s'étendant à partir de la face interne de ladite face plane 31. Ces logements sont de dimension adaptée à l'insertion des pattes d'encliquetages 20 d'un embout mâle 2. lesdits logements 30 présentent des lumières 32 dans lesquelles se positionnent les languettes élastiques 22.

L'embout femelle 3 est traversé par une ouverture 33 de dimensions sensiblement égales aux dimensions externes du bossage 23 de l'embout mâle. Cette ouverture 33 est, lorsque l'embout femelle est fixé au support de contacts, disposée en face des gouttières 56 à 58 et les extrémités plates des barres de contact s'étendent à travers celle-ci jusqu'au niveau de la face plane 31.

Lors de la mise en place d'une installation électrique, l'utilisateur choisit les éléments modulaires portant les éléments fonctionnels qui lui sont nécessaires. Il solidarise alors ces éléments modulaires les uns aux autres en introduisant les pattes d'encliquetage 20 et le bossage 23 de l'embout mâle de l'un des éléments dans les logements 30 et l'ouverture 33 de l'embout femelle d'un autre élément. Ce faisant, la coopération des pattes d'encliquetage 20 avec les logements 30 et du bossage 23 avec l'ouverture 33 assure un positionnement et un maintien mécanique des éléments modulaires tandis que les pinces 69 positionnées dans le bossage de l'embout mâle serrent les extrémités plates disposées dans l'ouverture 33 de l'embout femelle et assurent la connexion électrique des deux éléments.

Dans la réalisation représentée au dessin, l'alimentation électrique des éléments se fait par l'embout mâle ce qui fournit des assemblages d'éléments modulaires dont le dernier se termine par la paroi externe plane d'un embout femelle.

Afin d'éviter que l'usager puisse toucher les extrémités plates des barres qui sont disposées dans l'ouverture 33 dudit embout femelle, un bouchon de sécurité 4 tel que celui représenté aux figures 21 et 22 est mis en place.

Ce bouchon de sécurité 4 est semblable à un embout mâle 2. Il comporte une face plane et pleine 41 qui peut, comme représenté, être de dimensions telles qu'elle recouvre uniquement la partie basse comportant l'ouverture 33 de la face plane 31 de l'embout femelle.

Sur le côté interne de cette face plane et pleine 41 sont prévus un bossage 43 et des pattes d'encliquetage 40 de mêmes dimensions que le bossage 23 et les pattes d'encliquetages 20 de l'embout mâle.

Ce bouchon de sécurité 4 peut ainsi être adapté sur l'embout femelle de la même façon qu'un embout mâle et obturer l'ouverture 33.

Lorsque deux éléments modulaires sont encliquetés l'un à l'autre, ou lorsqu'un bouchon de sécurité est monté sur un élément modulaire, les languettes élastiques 22 ou 42 des pattes d'encliquetage 20 ou 40 sont positionnées dans les lumières 32 des logements 30.

Pour déconnecter ces éléments ou ôter le bouchon de sécurité 4, il est nécessaire de repousser lesdites languettes élastiques vers l'intérieur des logements 30, par exemple à l'aide d'un tournevis, en même temps que les éléments sont écartés l'un de l'autre.

Les figures 23 à 27 montrent différentes variantes de réalisations des pattes 20 et 40 et des logements 30.

Dans ces réalisations, les pattes d'encliquetage 120 ont une portion repliée leur conférant une forme en U.

Dans la variante de la figure 23, la portion repliée est de grande longueur de manière à fournir une languette d'appui 121 s'étendant à l'extérieur du logement 130 lorsque la connexion est réalisée.

La patte élastique 120 présente de plus un ergot 122 adapté à pénétrer dans une lumière 132 du logement.

Pour la déconnexion des éléments, il suffit d'appuyer sur les languettes d'appui 121 tout en tirant sur les deux éléments.

Dans la variante des figures 24 et 25, la partie repliée de la patte 120 présente une languette 124 portant un ergot 123 sur sa face externe.

Le logement 130 présente une lumière 134 dans laquelle peut pénétrer la languette 124. Une rainure 133 de largeur au moins égale à l'épaisseur de l'ergot 123 relie ladite lumière à la face ouverte du logement 130.

Pour désolidariser les éléments, il faut appuyer sur l'ergot 123 ce qui repousse la languette 124 vers l'intérieur du logement 130 en la faisant échapper à la lumière 134, et tirer sur les éléments dans des directions opposées.

Dans ces deux variantes de réalisation, l'usager n'a pas besoin d'avoir un outil, il lui suffit de tenir l'un des éléments dans une main en appuyant sur la languette d'appui 121 ou sur l'ergot 123 et l'autre élément dans son autre main, et de tirer dans des directions opposées pour séparer lesdits éléments.

A la figure 26, la partie repliée de la patte 120 présente un ergot 126 adapté à pénétrer dans une lumière 136 et un bossage 125.

Le logement 130 comporte dans son fond une ouverture 135 dans laquelle sont disposés des moyens de désencliquetages tels qu'un poussoir éventuellement muni d'un ressort de rappel de manière à appuyer sur la partie repliée de la patte par l'action de ce poussoir sur le bossage 125. L'ergot 126 sort ainsi de la lumière 136.

Dans la variante représentée à la figure 27, la partie repliée de la patte 120 porte un bossage arrondi 127 pénétrant dans une lumière 137 du logement 130.

La forme arrondie du bossage 127 permet de désolidariser les éléments en tirant simplement sur ceux-ci.

Les parties repliées des pattes 120 et les ouvertures 132 à 134 et 136, 137 peuvent être dirigées vers l'extérieur des éléments modulaires comme représenté aux figures précédentes, mais peuvent également être dirigées vers la face inférieure desdits éléments modulaires. Les pattes élastiques 20 des figures 1 à 22 pourraient également être dirigées vers la face inférieures des éléments modulaires.

Dans la variante de réalisation de la figure 27, la partie repliée de la patte 120 peut être disposée dans toute direction désirée puisque l'usager n'a pas besoin d'y avoir accès.

Les éléments modulaires suivant l'invention ainsi que les moyens assurant leur connexion tant mécanique qu'électrique ayant été décrits, le bornier utilisé pour l'alimentation en courant électrique desdits éléments va maintenant être décrit en se référant aux figures 28 à 33.

Comme chacun des éléments modulaires, ce bornier 8 comporte une face avant 81 et un support de contacts 85.

La face avant 81 du bornier a une paroi supérieure fermée afin d'interdire tout accès à l'intérieur du bornier lorsque celui-ci est installé.

Le support de contact 85 porte trois moyens de fixation des câbles non représentés par lesquels est fourni le courant électrique. Ces moyens sont dans l'exemple représenté des plots à vis 80.

Ces plots à vis 80 sont solidarisés à des lames conductrices 86 visibles dans l'extrémité femelle 83 du bornier.

L'extrémité du bornier à laquelle seront raccordés les éléments modulaires est appelée extrémité femelle 83.

Cette extrémité femelle 83 présente une ouverture 133 traversée par les lames conductrices 86 et des logements 130 comportant une lumière 132 semblables à l'ouverture 33 et aux logements 30 des embouts femelles 3 des éléments modulaires. L'embout mâle 2 d'un élément modulaire peut ainsi être connecté à cette extrémité femelle 83.

Pour proposer aux usagers un appareillage de sécurité, le bornier est muni d'une cloison mobile nommée obturateur de bornier 87 qui est positionnée dans le plan de l'extrémité femelle 83 lorsqu'aucun élément n'est raccordé au bornier, et masque ainsi les lames conductrices 86.

L'obturateur de bornier 87 est repoussé vers cette position de repos pour laquelle il masque les lames conductrices 86 par des ressorts 84 disposés dans des logements formés par des nervures 82 du support de contact 85.

Cet obturateur de bornier 87 comporte une face plane 170 de mêmes dimensions que l'ouverture 133. Ladite face plane 170 est traversée de trois fentes rectangulaires 176 destinées au passage des lames conductrices 86.

Des bras 171 sont disposés de part et d'autre de la face plane 170, ils portent des plaques d'appui 172 pour l'appui des ressorts 84 et des plaques de maintien 174 pour assurer le maintien desdits ressorts 84 dans leurs logements.

Les bras 171 portent de plus des languettes élastiques 178 à extrémités recourbées.

Ces languettes élastiques 178 sont adaptées à venir en appui contre des épaulements 88 du support de contacts 85 afin de maintenir l'obturateur 87 dans sa position de repos à l'encontre des forces exercées sur lui par les ressorts 84.

Lorsqu'un élément modulaire est connecté à un tel bornier, le bossage 23 de l'embout mâle vient en appui contre l'obturateur 87 et le repousse à l'encontre des ressorts afin de pénétrer dans l'ouverture 133. En fin de raccordement, l'obturateur de bornier est dans la position représentée à la figure 31 pour laquelle les lames conductrices 86 sont découvertes.

Dans le même temps les pattes d'encliquetage 20 de l'embout mâle se positionnent dans les logements 130 du bornier avec leurs languettes élastiques dans les lumières 132.

Les pinces 69 présentent dans ce bossage 23 viennent se positionner autour des lames conductrices 86 pour assurer la connexion électrique.

Les figures 32 et 33 sont des variantes de réalisation du bornier et de l'embout mâle permettant de maintenir l'obturateur de bornier dans sa position de repos tant qu'un embout mâle n'est pas approché.

Ces variantes présentent l'avantage d'empêcher que ledit obturateur puisse être repoussé par l'usager de manière intentionnelle ou non et l'amène à pouvoir toucher les lames conductrices 86. L'usager faisant une intervention sur son installation électrique sans couper l'alimentation électrique est ainsi protégé.

Dans la variante de la figure 32, l'obturateur de bornier 287 porte des bras 271 terminés par un ergot 272.

Le support de contacts du bornier porte un logement 230 présentant une fenêtre 232 dans sa paroi le séparant de l'ouverture 233 dans laquelle sont positionnées les lames conductrices 86.

Au repos, l'ergot 272 est ainsi positionné dans la fenêtre 232 du logement 230 ce qui assure le maintien de l'obturateur 287 dans sa position de repos tant qu'une action intentionnelle pour le libérer n'est pas menée.

Le logement 230 présente également un bossage 231 sur sa face opposée à la fenêtre 232.

Des pattes élastiques recourbées en U 220 sont prévues dur le bossage 223 de l'embout mâle.

Ces pattes 220 sont insérées dans les logements 230 au cours de l'approche de l'embout mâle, le bossage 231 les force en contact avec l'ergot 272 de manière à faire sortir celui-ci de la fenêtre 232 et à permettre au bossage 223 de repousser l'obturateur de manière à découvrir les lames conductrices 86.

Les pattes 220 de l'embout mâle peuvent être celles assurant la connexion mécanique ou des pattes supplémentaires.

Dans la variante de réalisation de la figure 33, les pattes 271 de l'obturateur de bornier portent des bossages arrondis 273 se positionnant dans des lumières 233 des logements 230.

Dans cette variante, il faut pousser avec une certaine force sur l'obturateur pour le déplacer vers l'arrière ce qui élimine tous les risques lors de manipulation non intentionnelles.

De manière à apporter une sécurité supplémentaire à l'installation électrique, chaque embout femelle est équipé d'une cloison mobile ou obturateur d'embout de même type que l'obturateur de bornier décrit ci-dessus ce qui rend les bouchons de sécurité non indispensables, au moins dans la mise en oeuvre de variantes telles que celles des figures 32 et 33 pour lesquelles l'obturateur est maintenu dans sa position de repos.

## Revendications

1. Appareillage électrique analogue à une réglette constitué par assemblage d'éléments modulaires de fonctions variées, lesdits éléments modulaires étant munis de moyens coopérants d'interconnexion mécanique et électrique permettant de les assembler directement les uns aux autres, caractérisé en ce que lesdits éléments modulaires sont constitués d'une face avant (1) ayant au moins une fonction déterminée, d'un support de contacts (5) dans lequel sont montés les moyens nécessaires à la distribution de l'électricité, d'un embout mâle (2) et d'un embout femelle (3) comportant les moyens de connexion mécanique et électrique.

2. Appareillage selon la revendication 1, caractérisé en ce que le support de contacts (5) présente trois gouttières (56, 57, 58) pour la mise en place de barres conductrices (60, 61, 62).

3. Appareillage selon la revendication 2, caractérisé en ce que la gouttière centrale (57) reçoit la barre de terre tandis que les gouttières latérales (56, 58) reçoivent les barres de phase et de neutre.

4. Appareillage selon la revendication 2 ou la revendication 3, caractérisé en ce que les gouttières (56, 57, 58) sont de place en place partiellement obturées par des parois (90) disposées par paires perpendiculairement, aux parois des gouttières et laissant entre elles un passage étroit dans lequel est insérée la barre conductrice.

5. Appareillage selon l'une quelconque des revendications précédentes, caractérisé en ce que l'embout mâle (2) comporte une face plane (21) destinée à être fixée à l'extrémité du support de contact (5) afin d'en former une paroi d'extrémité et des moyens d'encliquetage pour sa solidarisation à l'embout femelle.

6. Appareillage selon la revendication 5, caractérisé en ce que les moyens d'encliquetage sont constitués par deux pattes d'encliquetage (20) munies de languettes élastiques (22).

7. Appareillage selon la revendication 5 ou la revendication 6, caractérisé en ce que un bossage (23) divisé en trois cavités (26, 27, 28) est disposé au centre de la face plane (21) dudit embout mâle, les trois cavités étant disposées dans le prolongement des gouttières (56, 57, 58).

8. Appareillage selon l'une quelconque des revendications précédentes, caractérisé en ce que l'embout femelle (3) comporte une face plane (31) destinée à former une paroi d'extrémité du support de contact (5) et des logements (30) pour l'insertion des moyens d'encliquetage d'un embout mâle (2).

9. Appareillage selon la revendication 8, caractérisé en ce que l'embout femelle (3) est traversé par une ouverture (33) de dimensions égales aux dimensions externes du bossage (23) de l'embout mâle, disposée en face des gouttières (56, 57, 58).

10. Appareillage selon la revendication 9, caractérisé en ce que des pinces (69) fixées aux extrémités des barres conductrices (60, 61, 62) sont à l'intérieur des cavités (26, 27, 28) de l'embout mâle (2) et les extrémités plates des barres de contact s'étendent à travers l'ouverture (33) de l'embout femelle (3).

11. Appareillage selon la revendication 10, caractérisé en ce qu'un bouchon de sécurité (4) de forme semblable à un embout mâle est fixé dans l'embout femelle afin d'éviter que l'usager puisse toucher les extrémités plates des barres qui sont disposées dans l'ouverture (33).

12. Appareillage selon la revendication 10, caractérisé en ce que chaque embout femelle (3) est équipé d'une cloison mobile ou obturateur d'embout.

13. Appareillage selon l'une quelconque des revendications précédentes, caractérisé en ce qu'il comporte un bornier (8) pour l'alimentation en courant électrique des éléments modulaires comportant une face avant (81) fermée et un support de contacts (85) portant trois moyens de fixation des câbles par lesquels est fourni le courant électrique solidarisés à des lames conductrices (86) visibles dans l'extrémité femelle (83) du bornier à laquelle seront raccordés les éléments modulaires.

14. Appareillage selon la revendication 13, caractérisé en ce que l'extrémité femelle (83) dudit bornier présente une ouverture (133) traversée par les lames conductrices (86) et des logements (130) semblables à l'ouverture (33) et aux logements (30) des embouts femelles (3) des éléments modulaires de manière à pouvoir connecter à cette extrémité femelle (83) l'embout mâle (2) d'un élément modulaire.

15. Appareillage selon la revendication 13 ou la revendication 14, caractérisé en ce que le bornier (8) est muni d'une cloison mobile ou obturateur de bornier (87) qui est positionnée dans le plan de l'extrémité femelle (83) lorsqu'aucun élément n'est raccordé au bornier, et masque les lames conductrices (86).

16. Appareillage selon la revendication 12 ou la revendication 15, caractérisé en ce que les cloisons mobiles utilisées pour obturer l'embout femelle (3) et/ou le bornier (8) sont maintenues dans leur position de repos.

17. Appareillage selon l'une quelconque des revendications 5 à 16, caractérisé en ce que des moyens de désencliquetage sont prévus pour le déverrouillage des moyens d'encliquetage.

## Patentansprüche

1. Elektrische analoge Vorrichtung mit einer Leiste, welche durch Zusammenbau von modularen Elementen verschiedener Funktionen gebildet ist, wobei die modularen Elemente durch zusammenarbeitende mechanische und elektrische Verbindungsmittel aneinander befestigt sind, mittels derer diese direkt aneinander montiert werden können, dadurch gekennzeichnet, daß die modularen Elemente durch eine Vorderfläche (1), welche mindestens eine bestimmte Funktion aufweist, einen Kontaktträger (5), in welchem die notwendigen Mittel zur Verteilung der Elektrizität montiert sind, einen männlichen Stecker (2) und einen weiblichen Stecker (3), die die mechanischen und elektrischen Verbindungsmittel enthalten, gebildet sind.

2. Vorrichtung nach Anspruch 1, dadurch gekennzeichnet, daß die Kontaktleiste (5) drei Schienen (56, 57, 58) zur Halterung von Leiterstangen (60, 61, 62) aufweist.

3. Vorrichtung nach Anspruch 2, dadurch gekennzeichnet, daß die mittlere Schiene (57) die Erdungsstange aufnimmt, während die seitlichen Schienen (56, 58) die Stangen der Phase und des Nulleiters aufnehmen.

4. Vorrichtung nach Anspruch 2 oder 3, dadurch gekennzeichnet, daß die Schienen (56, 57, 58) stellenweise durch Wandungen (90) teilweise überdeckt sind, die paarweise senkrecht an den Wandungen der Schienen angeordnet sind und zwischen sich einen schmalen Durchgang freilassen, durch welchen die Leiterstange eingeführt ist.

5. Vorrichtung nach einem der vorstehenden Ansprüche, dadurch gekennzeichnet, daß der männliche Stecker (2) eine ebene Fläche (21) aufweist, welche dazu bestimmt ist, an dem Ende des Kontaktträgers (5) befestigt zu werden, um dadurch eine Endwandung und Mittel zum Einrasten für seine Befestigung an dem weiblichen Stecker zu bilden.

6. Vorrichtung nach Anspruch 5, dadurch gekennzeichnet, daß die Mittel zum Einrasten durch zwei Einrastklauen (20) gebildet sind, welche mit elastischen Zungen (22) versehen sind.

7. Vorrichtung nach Anspruch 5 oder 6, dadurch gekennzeichnet, daß in der Mitte der ebenen Fläche (21) des männlichen Steckers eine in drei Höhlungen (26, 27, 28) unterteilte Fassung (23) vorgesehen ist, wobei die drei Höhlungen in der Verlängerung der Schienen (56, 57, 58) angeordnet sind.

8. Vorrichtung nach einem der vorstehenden Ansprüche, dadurch gekennzeichnet, daß der weibliche Stecker (3) eine ebene Fläche (31) aufweist, welche dazu bestimmt ist, eine Endwandung des Kontaktträgers (5) und Aufnahmen (30) für das Einführen der Einrastmittel eines männlichen Steckers (2) zu bilden.

9. Vorrichtung nach Anspruch 8, dadurch gekennzeichnet, daß der weibliche Stecker (3) durch eine Öffnung (33) durchdrungen ist, deren Abmessungen gleich den Außenabmessungen der Fassung (23) des männlichen Steckers sind, und die den Schienen (56, 57, 58) gegenüberliegend angeordnet ist.

10. Vorrichtung nach Anspruch 9, dadurch gekennzeichnet, daß an den Enden der Leiterstangen (60, 61, 62) befestigte Zangen (69) im Inneren der Höhlungen (26, 27, 28) des männlichen Steckers (2) liegen, und daß die äußersten Platten der Kontaktstangen sich durch die Öffnung (33) des weiblichen Stekkers (3) erstrecken.

11. Vorrichtung nach Anspruch 10, dadurch gekennzeichnet, daß ein Sicherungsstopfen (4), der in seiner Form einem männlichen stecker ähnelt, in dem weiblichen Stecker befestigt ist, um zu vermeiden, daß ein Benutzer die äußersten Platten der Leiterstangen berühren kann, welche in der Öffnung (33) angeordnet sind.

12. Vorrichtung nach Anspruch 10, dadurch gekennzeichnet, daß jeder weibliche Stecker (3) mit einer beweglichen Wand oder einem Steckerverschluß versehen ist.

13. Vorrichtung nach einem der vorstehenden Ansprüche, dadurch gekennzeichnet, daß die Vorrichtung ein Endstück (8) zur Einspeisung elektrischen Stroms zu den modularen Elementen aufweist, welches eine geschlossene Vorderfläche (81) und einen Kontaktträger (85) enthält, der drei Befestigungsmittel für Kabel aufweist, durch welche der elektrische Strom zugeführt wird, welche an Leiterplättchen (86) befestigt sind, die an dem weiblichen Ende (83) des Endstücks sichtbar sind, an dem die modularen Elemente angefügt werden.

14. Vorrichtung nach Anspruch 13, dadurch gekennzeichnet, daß das weibliche Ende (83) des Endstücks eine Öffnung (133), durch welche die Leiterplättchen (86) hindurchgreifen und Aufnahmen (130) aufweist, welche der Öffnung (33) und den Aufnahmen (30) der weiblichen Stecker (3) der modularen Elemente in einer Weise entsprechen, daß dieses weibliche Ende (83) mit einem männlichen Stecker (2) eines modularen Elements verbindbar ist.

15. Vorrichtung nach Anspruch 13 oder 14, dadurch gekennzeichnet, daß das Endstück (8) mit einer beweglichen Wand oder einem Endstückverschluß (87) versehen ist, welche in der Ebene des weiblichen Endes (83) angeordnet ist, falls kein Element an dem Endstück angeschlossen ist, so daß die Leiterplättchen (86) überdeckt sind.

16. Vorrichtung nach Anspruch 12 oder Anspruch 15, dadurch gekennzeichnet, daß die beweglichen Wandungen, die zum Verschließen des weiblichen Steckers (3) und/oder des Endstücks (8) verwendet sind, in ihrer Ruhestellung gehalten sind.

17. Vorrichtung nach einem der Ansprüche 5 bis 16, dadurch gekennzeichnet, daß Mittel zum Ausrasten vorgesehen sind, um die Einrastmittel zu entriegeln.

## Claims

1. An electrical assembly similar to an extension lead, formed by assembling modular elements of varied functions, said modular elements being provided with cooperating mechanical and electrical interconnection means which make it possible to assemble them directly together, characterised in that said modular elements are formed of a front face (1) having at least one given function, a contact support (5) in which are mounted the means necessary for distributing electricity, a male end piece (2) and a female end piece (3) comprising the mechanical and electrical connection means.

2. An assembly according to claim 1, characterised in that the contact support (5) has three gutters (56, 57, 58) for positioning conductive rods (60, 61, 62).

3. An assembly according to Claim 2, characterised in that the central gutter (57) receives the earth rod whilst the lateral gutters (56, 58) receive the phase and neutral rods.

4. An assembly according to Claim 2 or Claim 3, characterised in that the gutters (56, 57, 58) are in places partially blocked by walls (90) arranged in pairs perpendicularly to the walls of the gutters and leaving between them a narrow passage into which the conductive rod is inserted.

5. An assembly according to any one of the preceding claims, characterised in that the male end piece (2) comprises a planar face (21) intended to be fastened to the end of the contact support (5) in order to form an end wall thereof and engagement means for connecting it to the female end piece.

6. An assembly according to Claim 5, characterised in that the engagement means are formed by two engagement tabs (20) provided with elastic tongues (22).

7. An assembly according to Claim 5 or Claim 6, characterised in that a boss (23) divided into three cavities (26, 27, 28) is arranged in the centre of the planar face (21) of said male end piece, the three cavities being arranged in the prolongation of the gutters (56, 57, 58).

8. An assembly according to any one of the preceding claims, characterised in that the female end piece (3) comprises a planar face (31) intended to form an end wall of the contact support (5) and housings (30) for inserting the engagement means of a male end piece (2).

9. An assembly according to Claim 8, characterised in that the female end piece (3) is pierced by an opening (33) of dimensions equal to the external dimensions of the boss (23) of the male end piece, which opening is arranged facing the gutters (56, 57, 58).

10. An assembly according to Claim 9, characterised in that clamps (69) fastened to the ends of the conductive rods (60, 61, 62) are located within the cavities (26, 27, 28) of the male end piece (2) and the flat ends of the contact rods extend through the opening (33) in the female end piece (3).

11. An assembly according to Claim 10, characterised in that a safety plug (4) shaped similarly to a male end piece is fastened into the female end piece in order to prevent the user from being able to touch the flat ends of the rods located in the opening (33).

12. An assembly according to Claim 10, characterised in that each female end piece (3) is equipped with a mobile partition or end-piece plug.

13. An assembly according to any one of the preceding claims, characterised in that it comprises a terminal strip (8) for supplying electricity to the modular elements comprising a closed front face (81) and a contact support (85) bearing three fastening means for the cables via which the electricity is supplied, which are connected to conductive blades (86) visible in the female end (83) of the terminal strip to which the modular elements will be connected.

14. An assembly according to Claim 13, characterised in that the female end (83) of said terminal strip has an opening (133) through which the conductive blades (86) pass and housings (130) similar to the opening (33) and to the housings (30) of the female end pieces (3) of the modular elements so as to be able to connect the male end piece (2) of a modular element to this female end (83).

15. An assembly according to Claim 13 or Claim 14, characterised in that the terminal strip (8) is provided with a mobile partition or terminal-strip stopper (87) which is positioned in the plane of the female end (83) when no element is connected to the terminal strip, and masks the conductive blades (86).

16. An assembly according to Claim 12 or Claim 15, characterised in that the mobile partitions used for blocking the female end piece (3) and/or the terminal strip (8) are held in their initial position.

17. An assembly according to any one of Claims 5 to 16, characterised in that disengagement means are provided for unlocking the engagement means.
